# EUROPEAN PATENT APPLICATION

(11) **EP 4 067 676 A1**
(43) Date of publication of application: **05.10.2022**
(21) Application number: 21166233.3
(22) Date of filing: 31.03.2021
(51) Int. Cl.: F16B 21/07, A44B 17/00

(54) **FIXTURE FOR FIXING A MEMBER OF A FASTENER, MEMBER OF A FASTENER AND SNAP FASTENER**

(71) Applicant: YKK Europe Limited, London EC1Y 4TW (GB)
(72) Inventor: Di Girolami, Massimiliano, 63100 Ascoli Piceno (IT); Orsini, Simone, 63100 Ascoli Piceno (IT); Iwase, Yuichi, 63100 Ascoli Piceno (IT)
(74) Representative: Leinweber & Zimmermann

(57) **Abstract**

The invention relates to a fixture for fixing a member of a fastener, particularly of a snap fastener, to a support, comprising: a base and 2 or more protrusions, preferably 2 to 10, more preferably 2 to 6.

According to the invention, there is provided a solid column protruding from said base, wherein said protrusions are protruding from a distal end of said column.

## Description

The invention refers to a fixture for fixing a member of a fastener, particularly of a snap fastener, to a support, comprising a base and 2 or more protrusions, preferably 2 to 10, more preferably 2 to 6.

Said fastener member is, e.g. a female member of a snap fastener fixed to a fabric by said fixture and configured to cooperate with a mating male member of the snap fastener.

Fixtures as described above are known, e.g. from EP 3 228 206 A1 with protrusions in the form of shanks.

A similar fixture is known from GB 2 029 888 B with protrusions in the form of prongs.

DE 38 14 497 A1 describes a fixture with a single protrusion in the form of a sleeve or pipe. A similar solution is known from EP 2 524 612 A1, but with hollows or grooves at the distal end of the sleeve or pipe.

With the fixture according to EP 3 228 206 A1, there is a problem that the shanks are strongly strained, so that the fixture is not in any case reliable.

In view of the above, it is an object of the invention to enhance reliability of the fixture known from EP 3 228 206 A1.

According to the invention, the above object is achieved by a solid column protruding from the base, wherein the protrusions are protruding from a distal end of the column.

Distal refers to a position furthest the plane of the base and proximal refers to a position farthest from the distal position in a direction perpendicular towards the plane of the base. Height refers to a distance measured in the direction proximal-distal that is a distance perpendicular to the plane of the base; the same distance when measured in the distal-proximal direction is referred to as 'depth'. Outer refers to a direction away from the central axis of the member and 'inner' refers to its opposite. Width refers to a distance between two points on the member parallel to a plane perpendicular to the column which may be obtained by a straight line or an arc.

The column according to the invention is a structure configured and positioned to extend into or through the support or a part of the fastener member or both of them in the proximal-distal direction, when the fixture is in a condition fixing the fastener member to the support.

The column according to the invention can be looked at as a pedestal on which the 2 or more protrusions are standing.

Due to the solid column, the extent to which the protrusions are bent on attachment to a support for fixing a member of a fastener to the support is limited. Thereby, the maximum strain applied to the protrusions is reduced, enhancing the reliability thereof.

The column protrudes from the base preferably from its central axis.

Preferably, the column and/or at least one of the protrusions is /are perpendicular to the plane of the base.

According to a preferred embodiment of the invention, the total cross-sectional area at the proximal ends of all the protrusions protruding from the column is smaller than the cross-sectional area of the column at the distal end thereof. This particularly facilitates the application of the fixture, particularly by facilitating the bending of the protrusions.

Preferably the protrusions are equidistant from each other.

Preferably a portion of the distal end of the column between two adjacent protrusions is radial, and more preferably concave.

Preferably the protrusions extend immediately from the solid column, however in some embodiments, an annular portion may be comprised between the distal end of the solid column and the proximal portion of the protrusions. Preferably the annular portion extends around the entire periphery of the column. Such a portion may save on material. This saving may be obtained because height from the proximal portion of the column to the distal surface of a protrusion must be greater than a support and so may be particularly convenient for deeper supports. The inner-outer dimensions of the protrusions and of the annular portion need not be the same.

Preferably the protrusions extend from the periphery of the distal end of the column. Preferably the periphery formed by the outer surfaces of the protrusions and the spaces therebetween is cylindrical.

Preferably, the base has a recess adjacent to the column. This recess can take in parts of the above-mentioned support and/or of the above-mentioned fastener member. To this end, the cross-sectional contour of the recess might be rounded.

The column is preferably higher than the recess, but need not be.

In a preferred embodiment of the invention, the recess is in the form of a closed loop, e.g. ring-shaped and circulates the column. Thereby, the fixture is invariant to the orientation of said fastener member in the circumferential direction.

According to a further preferred embodiment of the invention, the depth of the recess is smaller than the length of at least one of the protrusions. Namely, the protrusions have to pierce said support, e.g. a fabric, whereas the recess just holds a portion of it.

Preferably, the respective height or depth of each of the column, the protrusions and the annular portion is consistent but variations are also possible.

Preferably, the column is cylindrical at its distal end. This helps to prevent cracking.

According to one embodiment of the invention, the top surface of at least one of the protrusions is flat. This ensures that the part of the fastener member within which the protrusion is retained in order to fix the fastener member to the support is not damaged or deformed by the respective protrusion.

Various shapes, including trapezoids and triangles may be selected, taking into account the dimensions of the inner and outer circumference of the column. Thus the top surface of a protrusion may comprise a portion of an annulus, with an outer circumference greater than an inner circumference and the width taking the form of an arc.

Preferably the outer circumference arc has the same radius as the column and the radius of the inner circumference arc is smaller.

The width of at least one of the protrusions at the outer circumference thereof may be greater than at the inner circumference thereof. This enhances the contact with the cooperating part of the fastener member and thus provides stability.

According to a preferred embodiment of the invention, the outer surfaces of at least one of the protrusions and the column are flush with one another at the proximal end of said protrusion and the distal end of the column, respectively. Thereby, not only the respective protrusion, but also the column can pierce the support.

For the same reason, it is preferred that the column protrudes beyond the total contour of the base in the distal direction.

The contour of the base can have any shape according to the invention. Preferably, however, said contour is circular or in the shape of a star or a cross.

According to a preferred embodiment of the invention, the base, the column and the protrusions are integrally formed. This simplifies the manufacturing process.

The invention is not limited to certain materials. Preferably, however, the base, the column and/or the protrusions comprise(s) metal, in particular a zinc alloy, or comprises injection-molded plastic material.

In addition to the above-described fixture, the invention refers to a member of a fastener, particularly of a snap fastener, in combination with a fixture as described above.

Finally, the invention refers to a snap fastener comprising such a member.

In the following description, the invention is explained in more detail with reference to the drawings given as preferred examples. The drawings show the following:
- Fig. 1: a perspective view of a fixture according to a first embodiment of the invention,
- Fig. 2: a plan view of the fixture according to Fig. 1,
- Fig. 3: a schematical sectional view of the fixture according to Fig. 1,
- Fig. 4: a schematical sectional view of the fixture according to Fig. 1, fixing a snap fastener member to a support,
- Fig. 5: the same view as Fig. 4, but of another embodiment,
- Fig. 6: a schematical sectional exploded view of a snap fastener according to the invention, together with 2 supports,
- Fig. 7: a side view of an embodiment of the snap fastener according to the invention, mounted to 2 supports,
- Fig. 8: a schematical sectional view of a snap fastener according to an embodiment of the invention, mounted to 2 supports, and
- Figs. 9 and 10: top views of fixtures according to the invention having contours in the shape of a star or a cross, respectively.

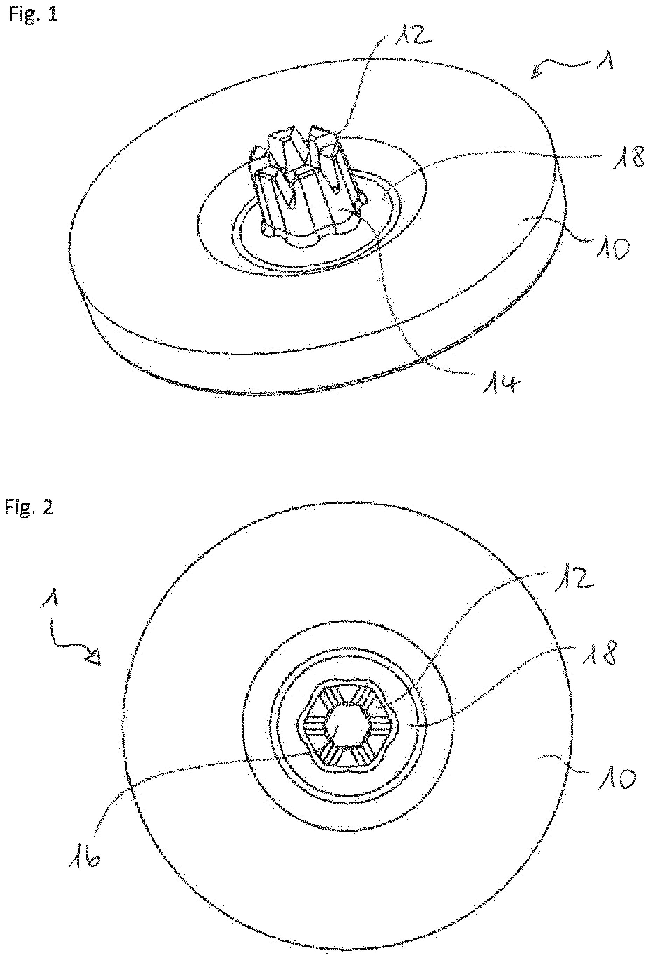

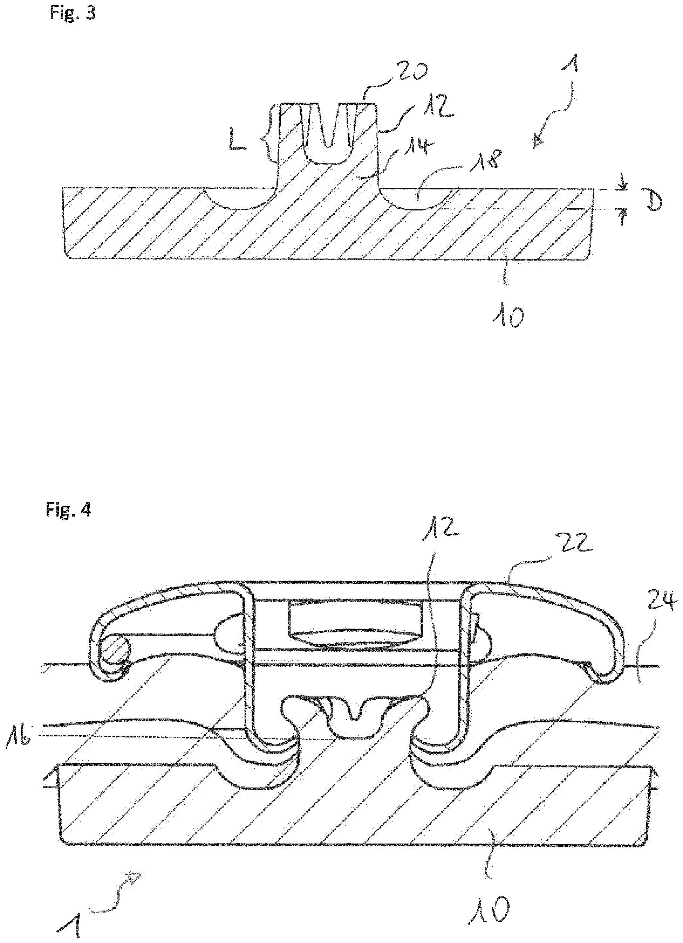

Fixture 1 shown in Figs. 1 to 3 is an integrally formed part made of a zinc alloy and comprises a base 10, six protrusions, one of which having the reference numeral 12, and a solid column 14. As is particularly to be taken from Fig. 3, protrusions 12 protrude from the distal end 16 of column 14.

What is to be taken from Fig. 2 is that the total cross-sectional area at the proximal ends of protrusions 12 is smaller than the cross-sectional area of column 14 at distal end 16 thereof. In other words, protrusions 12 are positioned distant from one another with some room between them.

Column 14 is surrounded by a recess 18. According to Fig. 3, the cross-sectional contour of recess 18 is rounded. This facilitates the mounting of the fixture to other components. The depth D of recess 18 is smaller than the length L of protrusions 12. Particularly in the region of its distal end 16, column 14 is cylindrical.

As is to be taken from Fig. 3, at least one top surface 20 of protrusions 12 is flat. Said top surface has trapezoidal shape because the width of protrusions 12 at the outer circumference of the column 14 is greater than at the inner circumference of said pedestal, cf. particularly Fig. 1. In the embodiment described, the protrusions are of similar (trapezoidal) design but any appropriate combination of designs may be selected.

Fig. 4 shows a female member 22 of a snap fastener attached to a support 24 by fixture 1 according to Figs. 1 to 3. For attaching female member 22 to support 24, fixture 10 and female member 22 are held coaxially with another with support 24 therebetween, and upper and lower dies (not shown) are used to make protrusions 12 to pierce support 24 and to bend from the status shown in Fig. 3 into the status shown in Fig. 4. To this end, female member 22 and support 24 are moved in a direction toward fixture 10, for example downwards, so that protrusions 12 pierce support 24 and reach into the lower part of female member 22. Simultaneously, column 14 enters into the pierced hole of support 24 and even beyond into female member 22. Moving the dies so that they further approach each other further results in protrusions 12 being bent outwardly, preventing female member 22 and thereby support 24 from deassembling from fixture 10, so that female member 22 is fixed or attached to support 24 by fixture 10. What is to be taken from Fig. 4 is that the rounded contour of recess 18 helps to take in support 24, which support 24 may be a fabric, for example.

Preferably a protrusion is substantially perpendicular the plane of the base. As can be taken from Fig 4. upon attachment to a support, force is applied to the base of the fixture such that the protrusion and preferably a portion of the column comprising the distal end 16 of the column enters and penetrates the support. Less force is required when a protrusion is perpendicular. Because the column is substantially solid, when attaching force is applied to the base, this does not crack or otherwise deform the column. In a similar manner, it is preferable that the column protrudes in a direction substantially perpendicular to the plane of the base that is to say, parallel to the intended direction of the attaching force.

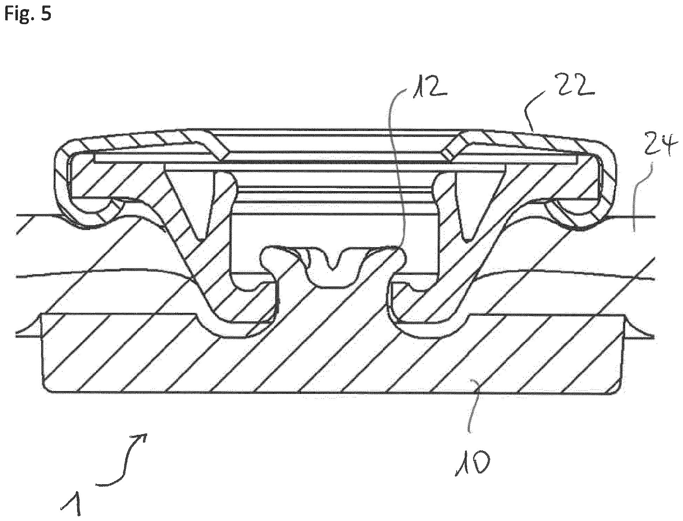

Fig. 5 shows fixture 1 holding a female member 22 differing in some respects from the female member 22 shown in Fig. 4. Particularly, a part of female member 22 shown in Fig. 5 is made of plastic, whereas female member 22 shown in Fig. 4 is completely made of metal material.

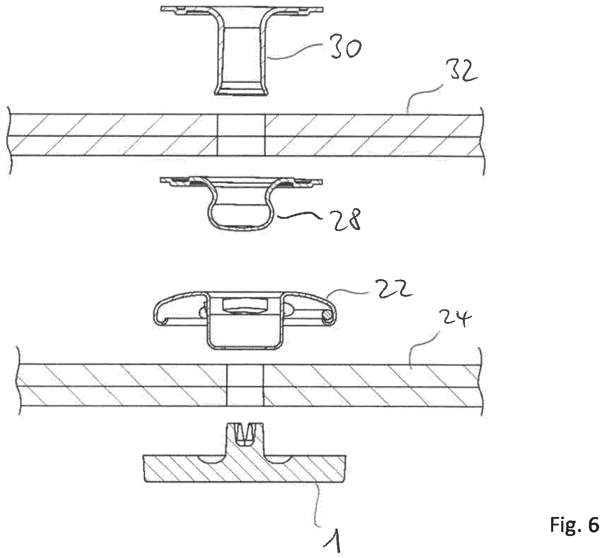

Fig. 6 shows fixture 1 for fixing female member 22 to support 24 as well as male member 28 to be held by fixture 30 on support 32. Fixture 30 for male member 28 may be laid out according to the invention, e.g. like fixture 1 for female member 22, while this is not the case in the embodiment shown in Fig. 6.

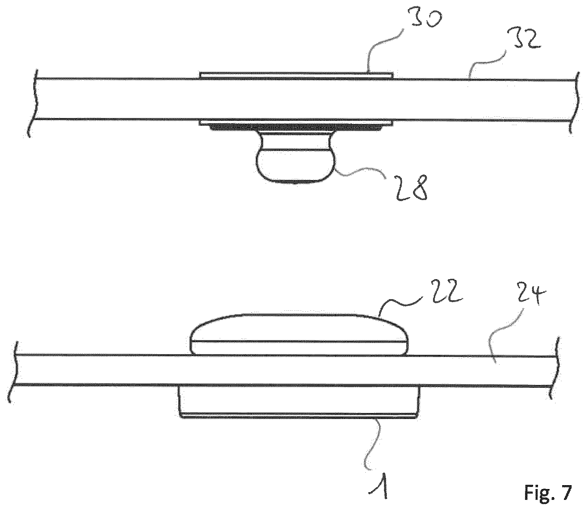

Fig. 7 shows parts similar to the parts shown in Fig. 6, but in the mounted status. What is to be noted in this respect is that Fig. 7 is a schematical view.

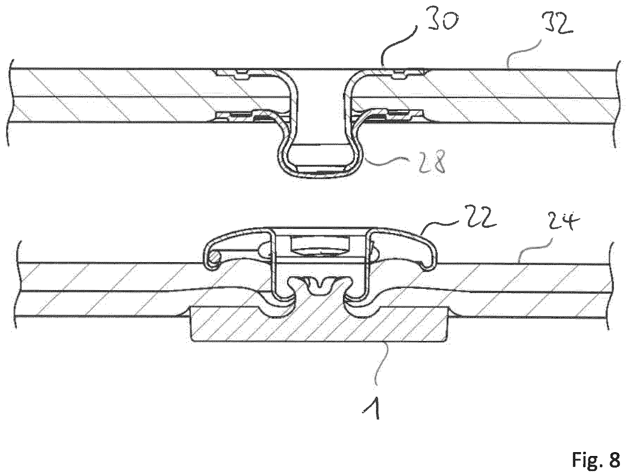

Fig. 8 shows a situation similar to Fig. 7, but as a sectional view.

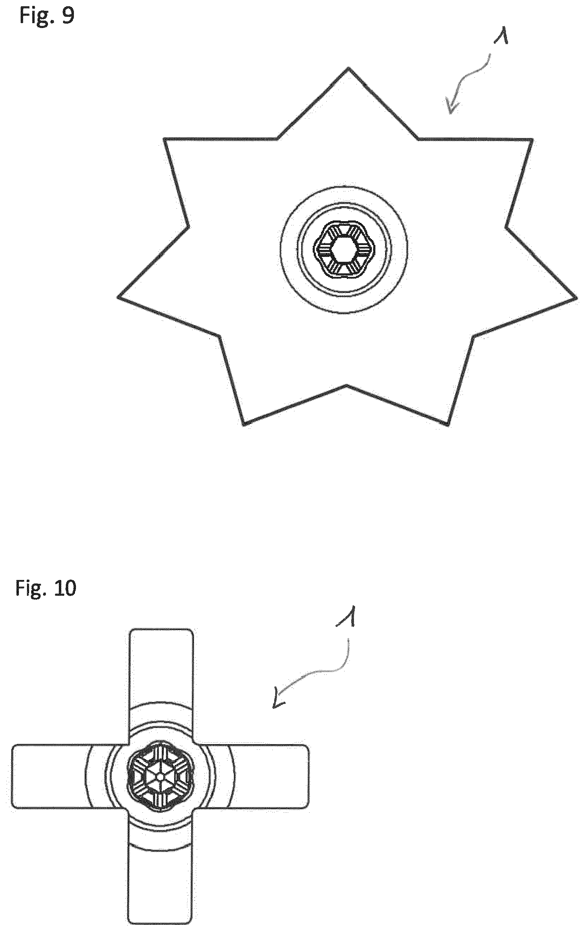

As is to be taken from Figs. 9 and 10, the outer contour of base 10 of fixture 1 can have various shapes apart from the circular, particularly the shapes of a star or a cross. Contrary thereto, column 14 and/or recess 18 have preferably more or less circular shapes in order to be invariant to the orientation of the fastener member to be held in the circumferential direction.

The characteristics of the invention disclosed in the above description, claims and drawings may be important for implementing the invention in its various embodiments both individually and also in any possible combination.

## Claims

1. Fixture (1) for fixing a member (22, 28) of a fastener, particularly of a snap fastener, to a support (24, 32), comprising:
a base (10) and
2 or more protrusions (12), preferably 2 to 10, more preferably 2 to 6,
**characterized by**
a solid column (14) protruding from said base (10), wherein said protrusions (12) are protruding from a distal end of said column (14).

2. Fixture according to claim 1, **characterized in that** the total cross-sectional area at the proximal ends of all the protrusions (12) protruding from said column (14) is smaller than the cross-sectional area of said column (14) at the distal end thereof.

3. Fixture according to claim 1 or 2, **characterized in that** said base (10) has a recess (18) adjacent to said column (14).

4. Fixture according claim 3, **characterized in that** said recess (18) is in the form of a closed loop, e.g. ring-shaped and circulates said column (14).

5. Fixture according to claim 3 or 4, **characterized in that** the depth (D) of said recess (18) is smaller than the length (L) of at least one of said protrusions (12).

6. Fixture according to any preceding claim, **characterized in that** said column (14) is cylindrical at its distal end.

7. Fixture according to any preceding claim, **characterized in that** the top surface (20) of at least one of said protrusions (12) is flat.

8. Fixture according to any preceding claim, **characterized in that** the width of at least one of said protrusions (12) at the outer circumference is greater than at the inner circumference.

9. Fixture according to any preceding claim, **characterized in that** the outer surfaces of at least one of the protrusions (12) and the column (14) are flush with one another at the proximal end of said protrusion (12) and the distal end of the column (14), respectively.

10. Fixture according to any preceding claim, **characterized in that** the column (14) protrudes beyond the total contour of the base (10) in the distal direction.

11. Fixture according to any preceding claim, **characterized in that** the contour of said base (10) is circular or in the shape of a star or a cross.

12. Fixture according to any preceding claim, **characterized in that** said base (10), said column (14) and said protrusions (12) are integrally formed.

13. Fixture according to any preceding claim, **characterized in that** said base (10), said column (14) and/or said protrusions (12) comprise(s) metal, in particular a zinc alloy.

14. Fixture according to any preceding claim, **characterized in that** it comprises injection-molded plastic material.

15. Member of a fastener, particularly of a snap fastener, in combination with a fixture (1) according to any preceding claim.

16. Member of a fastener according to claim 15, **characterized in that**, when fixed to a support (24), the column (14) of the fixture (10) extends into or through the support (24) and/or a part of the fastener member (22) in the proximal-distal direction.

17. Snap fastener comprising a member according to claim 15 or 16.
